# EUROPEAN PATENT APPLICATION

(11) **EP 0 909 530 A1**
(43) Date of publication of application: **21.04.1999**
(21) Application number: 98118412.0
(22) Date of filing: 29.09.1998
(51) Int. Cl.: A01N 25/02, A01N 25/04, A01N 37/48

(54) **Increased solubility of water soluble compounds**

(30) Priority: 16.10.1997 US 951919
(71) Applicant: BASF CORPORATION, Mount Olive, New Jersey 07828-1234 (US)
(72) Inventor: Finch, Charles W., Garner, NC 27529 (US)
(74) Representative: Langfinger, Klaus-Dieter, Dr.

(57) **Abstract**

Provided is a composition comprising: (a) a water soluble compound; (b) an effective amount of a dispersing agent sufficient to increase the solubility of the water soluble compound in an aqueous solution; and (d) water. Also provided is a method of increasing the solubility of a water soluble compound in an aqueous solution by adding to the solution a dispersing agent. Further provided herein is a method of forming a dispersion of crystals of a water soluble compound in an aqueous solution wherein the crystals of the compound in solution have a mean volume diameter of less than 20 microns comprising adding an effective amount of a dispersing agent, to the solution, sufficient to increase the solubility of the water soluble compound. The dispersing agent is an agent typically used to disperse organic compounds in aqueous media. A co-solvent may also be used in the compositions and methods.

## Description

The invention relates to the fields of dispersants, co-solvents and surfactants. The invention also relates to the field of herbicides, pesticides, and plant growth regulators formulations.

supersaturation of water soluble compounds, such as herbicides, has been noted particularly where aqueous solutions of such compounds are stored at cold temperatures causing precipitation of the compounds. For example acifluorfen-sodium has, as the technical grade, a concentration of about 43% to about 48% in aqueous systems. Because acifluorfen-sodium precipitates at ambient temperatures, commercial agueous formulations of acifluorfen-sodium are prepared that have a concentration of about 5% to about 25% of acifluorfen-sodium. Salt precipitation also occurs in samples that are stored under cold conditions. The precipitate is normally dissolved by heating and mixing the solution. This activity necessitates a significant expenditure of time, energy and labor. Moreover, the acifluorfen precipitate is difficult to dissolve and some formulations solidify after storage.

Therefore, it is an object of the present invention to provide a method and composition that inhibits the formation of precipitates in aqueous solutions containing highly water soluble compounds. It is another object of the invention to provide a method and composition that enhances the solubility of water soluble compounds in water.

Provided herein is a composition comprising a water soluble compound, a dispersing agent and water. The dispersing agent is provided in an effective amount sufficient to increase the solubility of the water soluble compound in the composition. Embodiments of the invention may include a co-solvent.

Also provided herein is a method of increasing the solubility of a water soluble compound in an aqueous solution by adding to the solution a dispersing agent. Also provided herein is a method of forming a dispersion of crystals of a water soluble compound in an aqueous solution wherein the crystals of the compound in solution have a mean volume diameter of less than 20 microns comprising adding an effective amount of a dispersing agent, to the solution, sufficient to increase the solubility of the water soluble compound.

Further provided herein is a method of inhibiting the precipitation of water soluble compounds in an aqueous solution comprising adding to the solution a dispersing agent.
Fig. 1 is a phase diagram representing data of precipitate formation in examples of the present invention comprising a formaldehyde-sodium naphthalenesulfonate as a dispersant and ethylene glycol as a co-solvent wherein the examples were stored at -10°C for two weeks;
Fig. 2 is a phase diagram representing data of precipitate formation in examples of the present invention comprising a formaldehyde-sodium naphthalenesulfonate as a dispersant and ethylene glycol as a co-solvent wherein the examples were stored at -10°C for two weeks and at room temperature for twenty-four hours;
Fig. 3 is a phase diagram representing data of precipitate formation in examples of the present invention comprising a formaldehyde-sodium naphthalenesulfonate as a dispersant and butyl cellosolve as a co-solvent wherein the examples were stored at -10°C for two weeks;
Fig. 4 is a phase diagram representing data of precipitate formation in examples of the present invention comprising a formaldehyde-sodium naphthalenesulfonate as a dispersant and butyl cellosolve as a co-solvent wherein the examples were stored at -10°C for two weeks and at room temperature for twenty-four hours;
Fig. 5 is a phase diagram representing data of precipitate formation in examples of the present invention comprising a formaldehyde-sodium naphthalenesulfonate as a dispersant and propylene glycol as a co-solvent wherein the examples were stored at -10°C for two weeks;

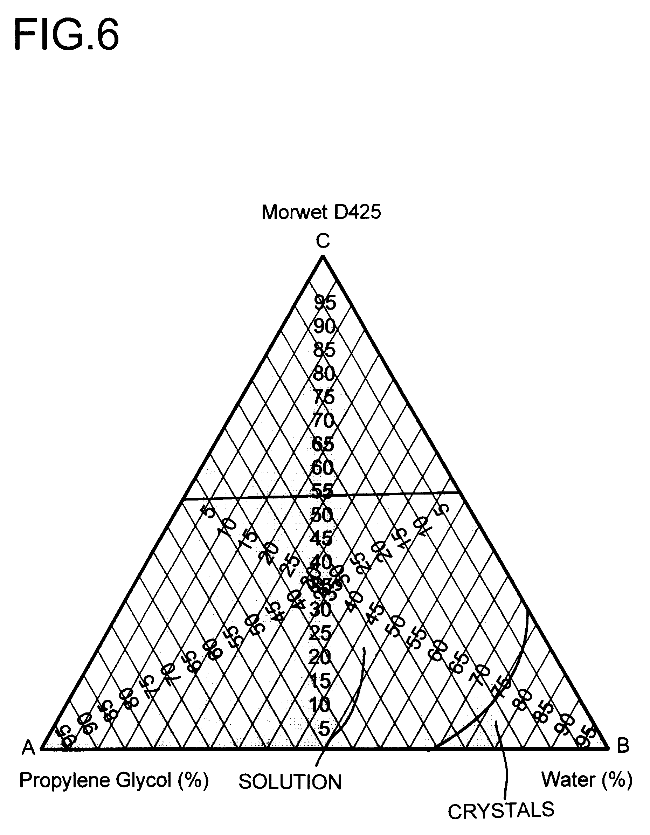

Fig. 6 is a phase diagram representing data of precipitate formation in examples of the present invention comprising a formaldehyde-sodium naphthalenesulfonate as a dispersant and propylene glycol as a co-solvent wherein the examples were stored at -10°C for two weeks and room temperature for twenty-four hours;

The dispersing agents that may be used in the present invention are those that are normally used to disperse organic material in aqueous solution such as those that disperse powders in liquids. These agents may have both a hydrophilic and a lipophillic component and may include surfactants. The dispersing agents may also comprise a wetting agent. Examples of dispersing agents that may be used to practice embodiments of the invention are described by Ralph D. Nelson, *Dispersing Powders in Liquids* (1988), published by E. I Dupont de Nemours & Co., Inc., Newark, DE, and incorporated herein by reference.

Some examples of dispersing agents for use in the present invention include sulfonates, alpha-olefin sulfonates, aromatic sulfonates, linear alkylbenzene sulfonates and polyacrylates.

Preferred dispersing agents are selected from alkyl-naphthaleneformaldehyde condensates, lignin polymers, alkyl naphthalene sulfonates and polymeric dispersants.

Aromatic sulfonates that may be used in the present invention include benzene, toluene, xylene and cumenesulfonates (e.g., UL-TRAWET® 405X (Arco)). An example of an akylbenzene sulfonate that may be used in the present invention is ULTRASWEET® 30DS (Arco).

Preferred naphthalene formaldehyde condensate polymers include formaldehyde-sodium naphthalenesulfonates co-polymers such as DAXAD® 11 to 19 series (Hampshire Chemical Corporation), GALORYL® DT 505 (CFPI), MORWET D425 (Witco), and TAMOL® (Rohm & Haas Company).

PEMULEN® TR-1 and TR-2 (The B. F. Goodrich Company) are other agents that may be used in the invention.

The dispersing agents may be added to a solution in order to reconstitute a precipitate or to increase the solubility of a compound after the solution has been stored under cold conditions. The dispersing agent may be added anytime to a solution containing a water soluble compound, for example before, during or after the addition of the water soluble compound. Preferably, the dispersing agent is pre-mixed with an aqueous solution prior to the addition of a water soluble compound or just after the water soluble compound is dissolved in an aqueous system.

The preferred amount, by weight, of the dispersing agent ranges, by weight of the total weight of the composition, from about 0.1% to about 7.0%, more preferably from about 2. 01% to about 5.0% most preferably at about 3.0%.

The co-solvents that may be used in the present invention comprise solvents that have both polar and non-polar attributes allowing it to produce a one phase system in water. Examples of preferred co-solvents include ketones, alcohols, aldehydes, ethers, and polar surfactants including condensation products of ethylene oxide, acetylenic glycols, ethoxylated acetylenic glycols, polyhydric alcohols, water soluble adducts of polyethylene oxide with polypropylene glycol, alkylpolpropylene glycol and sugar-based surfactants.

Examples of ketones that may be used as a co-solvent include acetone, methyl ethyl ketone, cyclohexanone, diethyl ketone, mesityl oxide, acetophenone, methyl isobutyl ketone, and isophorone.

Examples of alcohols that may be used as a co-solvent are those that are linear and branched chain alcohols having up to 6 carbon atoms for example methanol, ethanol, propanol, butanol, isobutanol, pentanol, and hexanol. Other alcohols that may also be used include benzyl alcohol, cyclohexanol, n-amyl alcohol, and diacetone.

The preferred co-solvents are polyhydric alcohols such as ethylene glycol, propylene glycol, glycerol, diethylene glycol, triethylene glycol, hexylene glycol, propanediol, butanediol, pentanediol, neopentyl glycol, and hexanediol.

Examples of esters that may be used as a co-solvent in the invention include alkyl formates, alkyl acetates, ethylene glycol alkyl ether acetate where the alkyl group comprises methyl, ethyl or propyl.

Examples of glycol ethers that may be used as a co-solvent include ethylene glycol mono alkyl ether, diethylene glycol mono alkyl ether, propylene glycol mono alkyl ether, and tripropylene glycol mono alkyl ether. Preferably, the akyl group may be methyl, ethyl, propyl, and butyl.

An acetylenic glycol that may be used as a co-solvent includes 2-butyne-1, 4-diol.

A preferred vinyllic glycol that may be used as a co-solvent includes 2-butene 1,4 diol.

Condensation products of ethylene oxide may also be used as a co-solvent and may include block copolymers of ethylene oxide and polyethylene oxide preferably containing about 25% to about 60% ethylene oxide.

Alkylphenol ethoxylates may also be used as a co-solvent wherein the alkyl group is preferably octyl, nonyl, or dinonyl and the ethoxylated portion is typically greater than 8 moles ethylene oxide.

The sugar based surfactants that may be used include akylpolyglycosides. An alkyl chain of n=8,10, 12, 14 or 16 of the akylpolyglycosides may be used with a degree of polymerization of 1.3 to 2.0. Examples of these materials are the AGRIMUL® surfactants (Henkel Corporation).

Organic acids may be used to buffer the solution as well as act as a co-solvent. The preferred organic acids include formic, acetic, benzoic, butyric, octanoic, oleic, and steric acid.

The co-solvents are provided in the invention preferably in an amount, by weight, of the total weight of the composition, ranging from about 0.1% to about 10%, more preferably from about 1.0% to about 7.0%, and most preferably at about 5%.

The co-solvent may be added anytime to a solution containing a water soluble compound and a dispersing agent, for example before, during or after the addition of the water soluble or the dispersing agent. Preferably, the co-solvent is added to an aqueous system at the same time that the dispersing agent is added and just after the water soluble compound is dissolved in an aqueous system.

Water soluble compounds for use in the present invention include those that are highly water soluble preferably herbicides, pesticides or plant growth regulators. Preferably, the water solubility of the water soluble compound is at least 5 g/l at 20°C and pH 7).

Specific water soluble compounds that may be used in the present invention include bentazon and it salts, dicamba and its salts, quinclorac and it salts, dichlorprop and its salts, diflufenzopyr and its salts, 2,4-D and its salts, fomesafen and it salts, MCPA and its salts, MCPB and its salts, Imazethapyr and its salts, imazamethabenz and its salts, and mecoprop and its salts.

Preferred compounds are those described in United States Patent Application Number 4, 594, 100, incorporated herein by reference, and includes compounds of the formula: 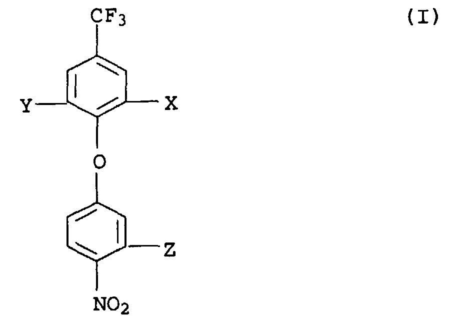 wherein
- X: is a hydrogen atom, a halogen atom, a trihalomethyl group, an alkyl group, or a cyano group,
- Y: is a hydrogen atom, a halogen atom, or a trihalomethyl group, and
- Z: is a hydroxy group, an alkoxy group, an akyl group, a halogen atom, an amino group, an akylthio group, a cyano group, a carboxy group, a carbalkoxy group, a carboxyalkyl group, a carbalkoxyalkyl group, an alkanoyloxy group, or a carbamoyloxy group.

The preferred compound includes salts of acifluorfen. Acifluorfen is represented by the formula:

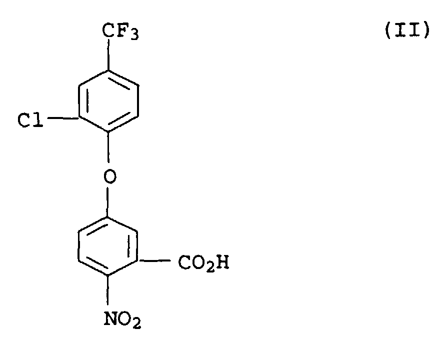

The most preferred water soluble compound for use in embodiments of the invention is acifluorfen-sodium.

While not wishing to be bound to the any theory, it is believed that the dispersant acts to form a hydrotrope. A hydrotrope is formed by the addition of a dispersant (or a short chain compound having a polar functional group) to dissolve poorly water soluble compounds.

The surprising and unexpected effects observed in carrying out the invention were that the solubility of a highly water soluble compound may be increased in water by the addition of a dispersant that is typically used to disperse organic powders and flowables in aqueous solutions. Also surprising was that in the experiments with acifluorfen-sodium, a substantial increase in solubility was observed using a low concentration of a dispersant, e.g., 1% to 5%. Typically, 20% or more of a dispersant is needed to be an effective hydrotrope in aqueous systems with compounds having poorly soluble compounds. Thus, the results obtained according to the teachings of the present invention may provide superior results with use of more then a twentyfold less amount than would be necessary in systems containing a poorly water soluble compound such as an organic powder.

The following examples are illustrative only and are not meant to limit the invention in any manner.

### Example 1

An aqueous solution having a concentration of 46.8 % acifluorfen (sodium salt, Rohm and Haas, Inc.; significant crystallization observed) was heated to about 50°C to 60°C and stirred until the crystals dissolved (about ten hours). The solution was allowed to cool to room temperature. The dispersants were separately added to the solutions containing the acifluorfen to form a 1.0% solution (by weight) of the dispersant. The resulting samples were stored at 5°C for four days.

After four days, the samples were removed from storage and allowed to reach room temperature and the volume occupied by crystals was calculated (visual estimates) . The results were obtained by observation using a polarized Nikon Optiphot-2 Pol microscope. At least three physical states were observed as the samples aged: 1) Solution state: defined as a solution that had a clear and transparent form and which did not exhibit any visual signs of crystal growth or gel formation; 2) Gel state: defined as solution that comprised a gel but may also include a crystal (the liquid crystal phase was confirmed by its ability to rotate polarized light); and a 3) Crystal state: defined as a solution that contained crystal growth.

The results along with the dispersants used in the experiments are displayed in Table 1.

**TABLE 1**

| Tradename | Chemical name | Percent Crystal Formation |
|---|---|---|
| Pemulen® TR-1 | polymeric-dispersant | 80 % Gel |
| Permulen® TR-2 | polymeric-dispersant | 70 % Gel |
| Morwet D425 | naphthalene-formaldehyde | 0 % |
| Polyfon® H | Kraft lignin-polymers | 20 % |
| Sokalan® PA 30 | polyacrylic-dispersants | 100 % |
| Geropon® T-51 | polycarboxylates | 90 % |
| Sokalan® HP50 | polyvinylpyrrolidone | 100 % |
| Supragil® NS-90 | alkylnaphthalene-sulfonate | 20 % |
| Water (Blank) | control | 90 % |

The samples containing the naphthalene-formaldehyde, the kraft lignin-polymers, and the akylnaphthalene-sulfonate samples provided a significant increase in the solubility of the acifluorfen.

The samples containing Morwet D425 displayed the greatest increase in solubility and inhibition of crystal growth. The addition of Morwet D425 reduced the crystal formation from 90% volume to 0% volume.

The samples containing the Pemulen® dispersants contained a gel that would re-disperse and mix easily. The gel structure was formed by altering the linking of the segments of the acifluorfen crystals, as observed under the polarized microscope. The gel structure was a 2 phase system and the gel structure occupied about 10% of the total volume of the solution.

The above results are surprising and unexpected in that it is believed by the inventor that although one of ordinary skill in the art would expect a dispersant to assist water insoluble compounds to be dispersed and to simplify dissolution, one of ordinary skill in the art would not expect an increase in the solubility of a water soluble compound such as acifluorfen-sodium.

### Example 2

Co-Solvents were evaluated for their ability to inhibit precipitation of acifluorfen in aqueous solutions. The experiment was carried-out using the same steps as described for the dispersants of Example 1. The co-solvents were evaluated at 5% and 10% by total weight of the solution. The formulations were stored at 5°C for 4 days and the percent crystal volume recorded after the temperature reached room temperature. The results and the co-solvents used are displayed in Table 2.

**TABLE 2**

| (Co-solvents) | | |
|---|---|---|
| Co-solvent | Amount (%) | Crystal Formation (%) |
| Ethylene Glycol | 5 | 10 |
| Ethylene Glycol | 10 | 15 |
| Propylene Glycol | 5 | 10 |
| Propylene Glycol | 10 | 80 |
| Butyl Cellosolve | 5 | 10 |
| Butyl Cellosolve | 10 | 15 |
| Water (control) | 10 | 90 |

Ten percent to 80% precipitate formation was observed with the samples containing the co-solvent whereas 90% precipitate formation was observed with the control. The ethylene glycol and butyl cellosolve solvents provided the most significant inhibition of precipitate.

### Example 3

The dispersants and co-solvents that showed superior crystal inhibition in examples 1 & 2 were chosen and tested according to the procedure set forth in Example 1. The combined weight percent of the combination was 10% of the total weight of the solution; the weight percent of the co-solvent was about 8% and the weight percent of the dispersant was about 2% of the total weight of the solution.

The dispersants, co-solvents, and their ratios are displayed, along with the results, in Table 3.

**TABLE 3**

| (Co-solvent-Dispersant) | | |
|---|---|---|
| Co-solvent: Dispersant | Amount By Weight | Percent Crystal Formation |
| Ethylene Glycol (8 %) + Morwet D425 (2 %) | 10 % | 0 % |
| Butyl Cellosolve (8 %) + Morwet D425 (2 %) | 10 % | 0 % |
| Water (Blank) control | 10 % | 90 % |

The co-solvent : dispersant mixture provided significant inhibition of crystal formation of the active agent (acifluorfen-sodium). The increase in solubility was observed using only 2% dispersant.

### Example 4

An experiment was completed varying the ratios of a formaldehyde-sodium naphthalenesulfonates co-polymer (Morwet D425) and co-solvent (ethylene glycol, propylene glycol, and butyl carbitol). Visual observations were performed according to the criteria set forth in Example 1. One set of samples was stored for two weeks at -10°C. Another set was stored at 5°C for two weeks. A third set of samples were stored at room temperature for two weeks. A fourth set of samples were stored at 54°C for two weeks. The samples remained at room temperature after being removed from storage. Precipitate volume was measured in each sample immediately and twenty-four hours after being removed from storage. The results are displayed in Tables 4-15.

It is interesting to note that the crystal structures at 5°C were more difficult to dissolve than the -10°C crystal structures. This was noted after the samples were removed and stored at ambient temperature for a 24 hour interval. In general, there appeared to be more crystal volume at 5°C.

**TABLE 4**

| Ethylene Glycol Solvent System Stored at -10°C for Two Weeks | | | | |
|---|---|---|---|---|
| Sample # | Ethylene Glycol | Morwet D425 | Water | Observation |
| 1 | 10.00 % | 0.00 % | 46.00 % | 2 phase with gel |
| 2 | 5.83 % | 0.59 % | 49.58 % | 1 phase |
| 3 | 5.68 % | 1.27 % | 49.05 % | 1 phase |
| 4 | 4.69 % | 0.78 % | 50.53 % | 1 phase |
| 5 | 4.06 % | 1.27 % | 50.67 % | 1 phase |
| 6 | 2.74 % | 1.69 % | 51.58 % | 1 phase |
| 7 | 1.59 % | 2.37 % | 52.04 % | 1 phase |
| 8 | 0.70 % | 2.50 % | 52.80 % | 1 phase |
| 9 | 0.45 % | 2.09 % | 53.46 % | 1 phase |
| 10 | 0.00 % | 3.00 % | 53.00 % | 1 phase |
| 11 | 7.48 % | 0.49 % | 48.03 % | 2 phase with gel |
| 12 | 7.51 % | 0.00 % | 48.49 % | 1 phase |
| 13 | 6.02 % | 0.00 % | 49.98 % | 1 phase |
| 14 | 4.99 % | 0.00 % | 51.01 % | 1 phase |
| 15 | 3.97 % | 0.00 % | 52.03 % | 1 phase |
| 16 | 1.53 % | 7.65 % | 46.81 % | 1 phase |
| 17 | 2.99 % | 3.49 % | 49.52 % | 1 phase |
| 18 | 0.00 % | 4.94 % | 51.06 % | 1 phase |
| 19 | 2.52 % | 4.99 % | 48.49 % | 1 phase |
| 20 | 2.52 % | 4.96 % | 48.52 % | 1 phase |
| 21 | 6.00 % | 3.49 % | 46.51 % | 2 phase with gel |
| 22 | 4.16 % | 4.85 % | 46.99 % | 1 phase |
| 23 | 5.00 % | 5.00 % | 46.00 % | 2 phase with gel |
| 24 | 1.82 % | 1.20 % | 52.98 % | 1 phase |
| 25 | 8.50 % | 1.50 % | 46.00 % | 2 phase with gel |
| 26 | 0.00 % | 0.00 % | 56.00 % | 2 phases with crystals |

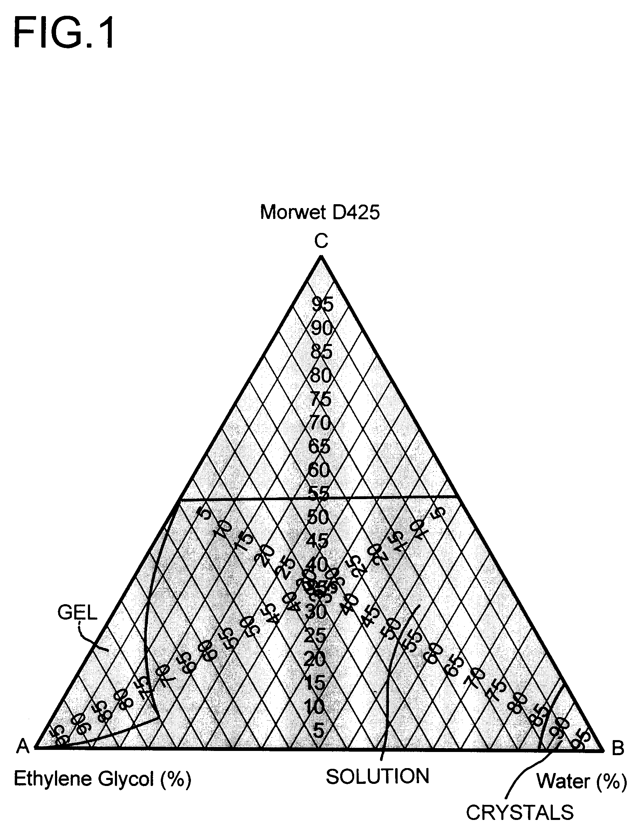

The data from Table 4 is represented in a phase diagram in figure 1.

**Table 5**

| Ethylene Glycol Solvent System Stored at 5°C for Two Weeks | | | | |
|---|---|---|---|---|
| Sample # | Ethylene Glycol | Morwet D425 | Water | Observation |
| 1 | 10.00 % | 0.00 % | 46.00 % | 2 phase with gel |
| 2 | 5.83 % | 0.59 % | 49.58 % | 1 phase |
| 3 | 5.68 % | 1.27 % | 49.05 % | 1 phase |
| 4 | 4.69 % | 0.78 % | 50.53 % | 1 phase |
| 5 | 4.06 % | 1.27 % | 50.67 % | 1 phase |
| 6 | 2.74 % | 1.69 % | 51.58 % | 1 phase |
| 7 | 1.59 % | 2.37 % | 52.04 % | 1 phase |
| 8 | 0.70 % | 2.50 % | 52.80 % | 1 phase |
| 9 | 0.45 % | 2.09 % | 53.46 % | 1 phase |
| 10 | 0.00 % | 3.00 % | 53.00 % | 1 phase |
| 11 | 7.48 % | 0.49 % | 48.03 % | 2 phase with gel |
| 12 | 7.51 % | 0.00 % | 48.49 % | 1 phase |
| 13 | 6.02 % | 0.00 % | 49.98 % | 1 phase |
| 14 | 4.99 % | 0. 00 % | 51.01 % | 1 phase |
| 15 | 3.97 % | 0.00 % | 52.03 % | 1 phase |
| 16 | 1.53 % | 7.65 % | 46.81 % | 1 phase |
| 17 | 2.99 % | 3.49 % | 49.52 % | 1 phase |
| 18 | 0.00 % | 4.94 % | 51.06 % | 1 phase |
| 19 | 2.52 % | 4.99 % | 48.49 % | 1 phase |
| 20 | 2.52 % | 4.96 % | 48.52 % | 1 phase |
| 21 | 6.00 % | 3.49 % | 46.51 % | 2 phase with gel |
| 22 | 4.16 % | 4.85 % | 46.99 % | 1 phase |
| 23 | 5.00 % | 5.00 % | 46.00 % | 2 phase with gel |
| 24 | 1.82 % | 1.20 % | 52.98 % | 1 phase |
| 25 | 8.50 % | 1.50 % | 46.00 % | 2 phase with gel |
| 26 | 0.00 % | 0.00 % | 56.00 % | 2 phase with crystals |

**TABLE 6**

| Ethylene Glycol Solvent System Stored at -10°C for Two Weeks Allowed to Reach Ambient Temperature for 1 Day | | | | |
|---|---|---|---|---|
| Sample # | Ethylene Glycol | Morwet D425 | Water | Observation |
| 1 | 10.00 % | 0.00 % | 46.00 % | 2 phase with gel |
| 2 | 5.83 % | 0.59 % | 49.58 % | 2 phase |
| 3 | 5.68 % | 1.27 % | 49.05 % | 1 phase |
| 4 | 4.69 % | 0.78 % | 50.53 % | 1 phase |
| 5 | 4.06 % | 1.27 % | 50.67 % | 1 phase |
| 6 | 2.74 % | 1.69 % | 51.58 % | 1 phase |
| 7 | 1.59 % | 2.37 % | 52.04 % | 1 phase |
| 8 | 0.70 % | 2.50 % | 52.80 % | 1 phase |
| 9 | 0.45 % | 2.09 % | 53.46 % | 1 phase |
| 10 | 0.00 % | 3.00 % | 53.00 % | 1 phase |
| 11 | 7.48 % | 0.49 % | 48.03 % | 1 phase |
| 12 | 7.51 % | 0.00 % | 48.49 % | 1 phase |
| 13 | 6.02 % | 0.00 % | 49.98 % | 1 phase |
| 14 | 4.99 % | 0.00 % | 51.01 % | 1 phase |
| 15 | 3.97 % | 0.00 % | 52.03 % | 1 phase |
| 16 | 1.53 % | 7.65 % | 46.81 % | 1 phase |
| 17 | 2.99 % | 3.49 % | 49.52 % | 1 phase |
| 18 | 0.00 % | 4.94 % | 51.06 % | 1 phase |
| 19 | 2.52 % | 4.99 % | 48.49 % | 1 phase |
| 20 | 2.52 % | 4.96 % | 48.52 % | 1 phase |
| 21 | 6.00 % | 3.49 % | 46.51 % | 2 phase with gel |
| 22 | 4.16 % | 4.85 % | 46.99 % | 1 phase |
| 23 | 5.00 % | 5.00 % | 46.00 % | 1 phase |
| 24 | 1.82 % | 1.20 % | 52.98 % | 1 phase |
| 25 | 8.50 % | 1.50 % | 46.00 % | 1 phase |
| 26 | 0.00 % | 0.00 % | 56.00 % | 2 phase with crystals |

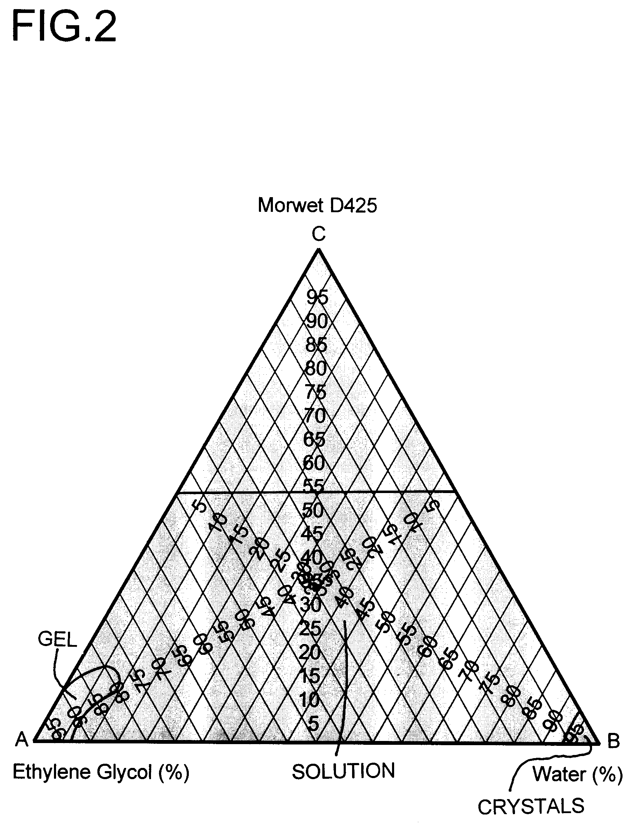

The data from Table 6 is represented in a phase diagram in figure 2.

**Table 7**

| Ethylene Glycol Solvent System Stored at 5°C for Two Weeks Allowed to Reach Ambient Temperature for 13 Days | | | | |
|---|---|---|---|---|
| Sample # | Ethylene Glycol | Morwet D425 | Water | Observation |
| 1 | 10.00 % | 0.00 % | 46.00 % | 2 phase with gel |
| 2 | 5.83 % | 0.59 % | 49.58 % | 1 phase |
| 3 | 5.68 % | 1.27 % | 49.05 % | 1 phase |
| 4 | 4.69 % | 0.78 % | 50.53 % | 1 phase |
| 5 | 4.06 % | 1.27 % | 50.67 % | 1 phase |
| 6 | 2.74 % | 1.69 % | 51.58 % | 1 phase |
| 7 | 1.59 % | 2.37 % | 52.04 % | 1 phase |
| 8 | 0.70 % | 2.50 % | 52.80 % | 1 phase |
| 9 | 0.45 % | 2.09 % | 53.46 % | 1 phase |
| 10 | 0.00 % | 3.00 % | 53.00 % | 1 phase |
| 11 | 7.48 % | 0.49 % | 48.03 % | 1 phase |
| 12 | 7.51 % | 0.00 % | 48.49 % | 1 phase |
| 13 | 6.02 % | 0.00 % | 49.98 % | 1 phase |
| 14 | 4.99 % | 0.00 % | 51.01 % | 1 phase |
| 15 | 3.97 % | 0.00 % | 52.03 % | 1 phase |
| 16 | 1.53 % | 7.65 % | 46.81 % | 1 phase |
| 17 | 2.99 % | 3.49 % | 49.52 % | 1 phase |
| 18 | 0.00 % | 4.94 % | 51.06 % | 1 phase |
| 19 | 2.52 % | 4.99 % | 48.49 % | 1 phase |
| 20 | 2.52 % | 4.96 % | 48.52 % | 1 phase |
| 21 | 6.00 % | 3.49 % | 46.51 % | 2 phase with gel |
| 22 | 4.16 % | 4.85 % | 46.99 % | 1 phase |
| 23 | 5.00 % | 5.00 % | 46.00 % | 1 phase |
| 24 | 1.82 % | 1.20 % | 52.98 % | 1 phase |
| 25 | 8.50 % | 1.50 % | 46.00 % | 1 phase |
| 26 | 0.00 % | 0.00 % | 56.00 % | 2 phase with crystals |

**Table 8**

| Butyl Cellosolve Solvent System Stored at -10°C for Two Weeks | | | | |
|---|---|---|---|---|
| Sample # | Butyl Cellosolve | Morwet D425 | Water | Observation |
| 1 | 10.00 % | 0.60 % | 45.40 % | 2 phase with gel |
| 2 | 5.88 % | 1.29 % | 48.82 % | 1 phase |
| 3 | 5.67 % | 0.80 % | 49.53 % | 1 phase |
| 4 | 4.70 % | 1.31 % | 49.99 % | 1 phase |
| 5 | 4.08 % | 1.69 % | 50.23 % | 1 phase |
| 6 | 2.71 % | 2.24 % | 51.05 % | 2 phase with crystals |
| 7 | 1.69 % | 2.54 % | 51.77 % | 2 phase with crystals |
| 8 | 0.70 % | 2.08 % | 53.21 % | 2 phase with crystals |
| 9 | 0.41 % | 3.00 % | 52.58 % | 2 phase with crystals |
| 10 | 0.00 % | 0.51 % | 55.49 % | 2 phase with crystals |
| 11 | 7.49 % | 0.00 % | 48.51 % | 2 phase with crystals |
| 12 | 7.46 % | 0.00 % | 48.54 % | 1 phase |
| 13 | 5.98 % | 0.00 % | 50.02 % | 2 phase with crystals |
| 14 | 4.98 % | 0.00 % | 51.02 % | 1 phase |
| 15 | 4.06 % | 2.48 % | 49.47 % | 1 phase |
| 16 | 4.91 % | 3.45 % | 47.64 % | 1 phase |
| 17 | 2.98 % | 4.97 % | 48.04 % | 1 phase |
| 18 | 0.00 % | 3.98 % | 52.02 % | 2 phase with crystals |
| 19 | 2.51 % | 6.23 % | 47.26 % | 1 phase |
| 20 | 2.49 % | 3.47 % | 50.04 % | 1 phase |
| 21 | 5.88 % | 4.88 % | 45.23 % | 2 phase with gel |
| 22 | 3.98 % | 4.98 % | 47.04 % | 1 phase |
| 23 | 5.02 % | 1.20 % | 49.79 % | 2 phase with gel |
| 24 | 1.81 % | 1.50 % | 52.68 % | 2 phase with crystals |
| 25 | 8.50 % | 0.00 % | 47.50 % | 2 phase with gel |
| 26 | 0.00 % | 0.00 % | 56.00 % | 2 phase with crystals |

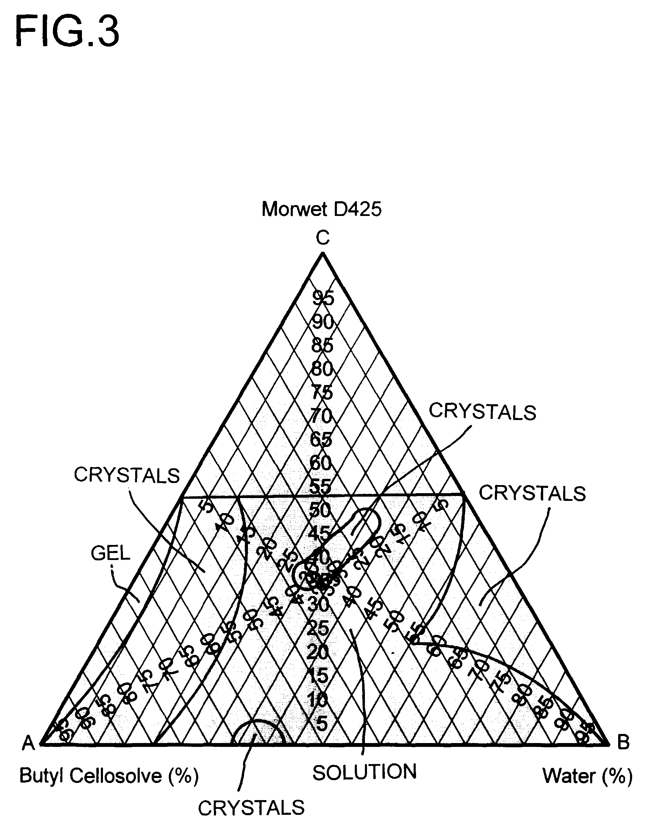

The data from Table 8 is represented in a phase diagram in figure 3.

**Table 9**

| Butyl Cellosolve Solvent System Stored at 5°C for Two Weeks | | | | |
|---|---|---|---|---|
| Sample # | Butyl Cellosolve | Morwet D425 | Water | Observation |
| 1 | 10.00 % | 0.60 % | 45.40 % | 2 phase with gel |
| 2 | 5.88 % | 1.29 % | 48.82 % | 2 phase with crystals |
| 3 | 5.67 % | 0.80 % | 49.53 % | 2 phase with crystals |
| 4 | 4.70 % | 1.31 % | 49.99 % | 2 phase with crystals |
| 5 | 4.08 % | 1.69 % | 50.23 % | 2 phase with crystals |
| 6 | 2.71 % | 2.24 % | 51.05 % | 2 phase with crystals |
| 7 | 1.69 % | 2.54 % | 51.77 % | 2 phase with crystals |
| 8 | 0.70 % | 2.08 % | 53.21 % | 2 phase with crystals |
| 9 | 0.41 % | 3.00 % | 52.58 % | 2 phase with crystals |
| 10 | 0.00 % | 0.51 % | 55.49 % | 2 phase with crystals |
| 11 | 7.49 % | 0.00 % | 48.51 % | 2 phase with crystals |
| 12 | 7.46 % | 0.00 % | 48.54 % | 2 phase with crystals |
| 13 | 5.98 % | 0.00 % | 50.02 % | 2 phase with crystals |
| 14 | 4.98 % | 0.00 % | 51.02 % | 2 phase with crystals |
| 15 | 4.06 % | 2.48 % | 49.47 % | 2 phase with crystals |
| 16 | 4.91 % | 3.45 % | 47.64 % | 2 phase with crystals |
| 17 | 2.98 % | 4.97 % | 48.04 % | 2 phase with crystals |
| 18 | 0.00 % | 3.98 % | 52.02 % | 2 phase with crystals |
| 19 | 2.51 % | 6.23 % | 47.26 % | 2 phase with crystals |
| 20 | 2.49 % | 3.47 % | 50.04 % | 2 phase with crystals |
| 21 | 5.88 % | 4.89 % | 45.23 % | 2 phase with crystals |
| 22 | 3.98 % | 4.98 % | 47.04 % | 2 phase with crystals |
| 23 | 5.02 % | 1.20 % | 49.79 % | 2 phase with crystals |
| 24 | 1.81 % | 1.50 % | 52.68 % | 2 phase with crystals |
| 25 | 8.50 % | 0.00 % | 47.50 % | 2 phase with crystals |
| 26 | 0.00 % | 0.00 % | 56.00 % | 2 phase with crystals |

**Table 10**

| Butyl Cellosolve Solvent System Stored at -10°C for Two Weeks Allowed to Reach Ambient Temperature for 1 Day | | | | |
|---|---|---|---|---|
| Sample # | Butyl Cellosolve | Morwet D425 | Water | Observation |
| 1 | 10.00 % | 0.60 % | 45.40 % | 2 phase with gel |
| 2 | 5.88 % | 1.29 % | 48.82 % | 2 phase with gel |
| 3 | 5.67 % | 0.80 % | 49.53 % | 1 phase |
| 4 | 4.70 % | 1.31 % | 49.99 % | 1 phase |
| 5 | 4.08 % | 1.69 % | 50.23 % | 1 phase |
| 6 | 2.71 % | 2.24 % | 51.05 % | 1 phase |
| 7 | 1.69 % | 2.54 % | 51.77 % | 1 phase |
| 8 | 0.70 % | 2.08 % | 53.21 % | 1 phase |
| 9 | 0.41 % | 3.00 % | 52.58 % | 1 phase |
| 10 | 0.00 % | 0.51 % | 55.49 % | 1 phase |
| 11 | 7.49 % | 0.00 % | 48.51 % | 2 phase with gel |
| 12 | 7.46 % | 0.00 % | 48.54 % | 2 phase with gel |
| 13 | 5.98 % | 0.00 % | 50.02 % | 1 phase |
| 14 | 4.98 % | 0.00 % | 51.02 % | 1 phase |
| 15 | 4.06 % | 2.48 % | 49.47 % | 1 phase |
| 16 | 4.91 % | 3.45 % | 47.64 % | 1 phase |
| 17 | 2.98 % | 4.97 % | 48.04 % | 1 phase |
| 18 | 0.00 % | 3.98 % | 52.02 % | 1 phase |
| 19 | 2.51 % | 6.23 % | 47.26 % | 1 phase |
| 20 | 2.49 % | 3.47 % | 50.04 % | 1 phase |
| 21 | 5.88 % | 4.89 % | 45.23 % | 2 phase with gel |
| 22 | 3.98 % | 4.98 % | 47.04 % | 1 phase |
| 23 | 5.02 % | 1.20 % | 49.79 % | 2 phase with gel |
| 24 | 1.81 % | 1.50 % | 52.68 % | 1 phase |
| 25 | 8.50 % | 0.00 % | 47.50 % | 2 phase with gel |
| 26 | 0.00 % | 0.00 % | 56.00 % | 2 phase with crystals |

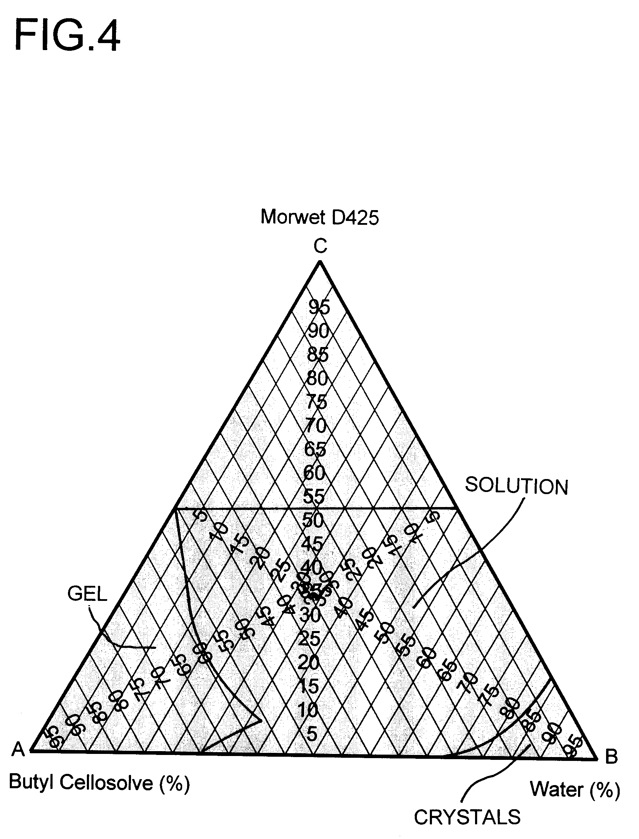

The data from Table 10 is represented in a phase diagram in figure 4.

**Table 11**

| Butyl Cellosolve Solvent System Stored at 5°C for Two Weeks Allowed to Reach Ambient Temperature for 1 Day | | | | |
|---|---|---|---|---|
| Sample # | Butyl Cellosolve | Morwet D425 | Water | Observation |
| 1 | 10.00 % | 0.60 % | 45.40 % | 2 phase with crystals |
| 2 | 5.88 % | 1.29 % | 48.82 % | 2 phase with crystals |
| 3 | 5.67 % | 0.80 % | 49.53 % | 2 phase with crystals |
| 4 | 4.70 % | 1.31 % | 49.99 % | 2 phase with crystals |
| 5 | 4.08 % | 1.69 % | 50.23 % | 2 phase with crystals |
| 6 | 2.71 % | 2.24 % | 51.05 % | 2 phase with crystals |
| 7 | 1.69 % | 2.54 % | 51.77 % | 2 phase with crystals |
| 8 | 0.70 % | 2.08 % | 53.21 % | 2 phase with crystals |
| 9 | 0.41 % | 3.00 % | 52.58 % | 2 phase with crystals |
| 10 | 0.00 % | 0.51 % | 55.49 % | 2 phase with crystals |
| 11 | 7.49 % | 0.00 % | 48.51 % | 2 phase with crystals |
| 12 | 7.46 % | 0.00 % | 48.54 % | 2 phase with crystals |
| 13 | 5.98 % | 0.00 % | 50.02 % | 2 phase with crystals |
| 14 | 4.98 % | 0.00 % | 51.02 % | 2 phase with crystals |
| 15 | 4.06 % | 2.48 % | 49.47 % | 2 phase with crystals |
| 16 | 4.91 % | 3.45 % | 47.64 % | 2 phase with crystals |
| 17 | 2.98 % | 4.97 % | 48.04 % | 2 phase with crystals |
| 18 | 0.00 % | 3.98 % | 52.02 % | 2 phase with crystals |
| 19 | 2.51 % | 6.23 % | 47.26 % | 2 phase with crystals |
| 20 | 2.49 % | 3.47 % | 50.04 % | 2 phase with crystals |
| 21 | 5.88 % | 4.89 % | 45.23 % | 2 phase with crystals |
| 22 | 3.98 % | 4.98 % | 47.04 % | 2 phase with crystals |
| 23 | 5.02 % | 1.20 % | 49.79 % | 2 phase with crystals |
| 24 | 1.81 % | 1.50 % | 52.68 % | 2 phase with crystals |
| 25 | 8.50 % | 0.00 % | 47.50 % | 2 phase with crystals |
| 26 | 0.00 % | 0.00 % | 56.00 % | 2 phase with crystals |

**TABLE 12**

| Propylene Glycol Solvent System Stored at -10°C for Two Weeks | | | | |
|---|---|---|---|---|
| Sample # | Propylene Glycol | Morwet D425 | Water | Observation |
| 1 | 10.00 % | 0.00 % | 46.00 % | 2 phase with gel |
| 2 | 5.90 % | 0.60 % | 49.50 % | 2 phase with crystals |
| 3 | 5.72 % | 1.30 % | 48.99 % | 2 phase with crystals |
| 4 | 4.68 % | 0.81 % | 50.51 % | 1 phase |
| 5 | 4.10 % | 1.31 % | 50.59 % | 1 phase |
| 6 | 2.75 % | 1.69 % | 51.56 % | 2 phase with crystals |
| 7 | 1.64 % | 2.39 % | 51.97 % | 2 phase with crystals |
| 8 | 0.74 % | 2.48 % | 52.78 % | 1 phase |
| 9 | 0.45 % | 2.09 % | 53.46 % | 2 phase with crystals |
| 10 | 0.00 % | 2.99 % | 53.01 % | 2 phase with crystals |
| 11 | 7.51 % | 0.49 % | 48.00 % | 2 phase with gel |
| 12 | 7.45 % | 0.00 % | 48.55 % | 2 phase with gel |
| 13 | 5.98 % | 0.00 % | 50.02 % | 2 phase with crystals |
| 14 | 5.04 % | 0.00 % | 50.96 % | 1 phase |
| 15 | 3.99 % | 0.00 % | 52.01 % | 1 phase |
| 16 | 5.00 % | 2.50 % | 48.51 % | 2 phase with crystals |
| 17 | 2.98 % | 3.49 % | 49.53 % | 1 phase |
| 18 | 0.00 % | 4.99 % | 51.01 % | 1 phase |
| 19 | 1.56 % | 3.06 % | 51.38 % | 1 phase |
| 20 | 2.51 % | 4.94 % | 48.54 % | 1 phase |
| 21 | 5.91 % | 3.44 % | 46.64 % | 2 phase with crystals |
| 22 | 3.98 % | 4.97 % | 47.05 % | 1 phase |
| 23 | 4.99 % | 5.01 % | 46.00 % | 1 phase |
| 24 | 1.86 % | 1.20 % | 52.94 % | 2 phase with crystals |
| 25 | 8.50 % | 1.50 % | 46.00 % | 2 phase with crystals |
| 26 | 0.00 % | 0.00 % | 56.00 % | 2 phase with crystals |

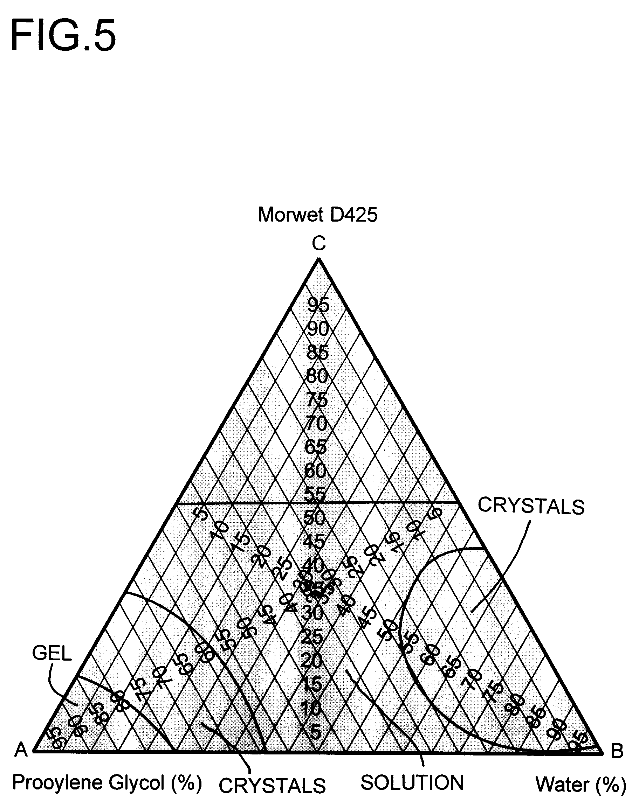

The data from Table 12 is represented in a phase diagram in figure 5.

**TABLE 13**

| Propylene Glycol Solvent System Stored at 5°C for Two Weeks | | | | |
|---|---|---|---|---|
| Sample # | Propylene Glycol | Morwet D425 | Water | Observation |
| 1 | 10.00 % | 0.00 % | 46.00 % | 2 phase with crystals |
| 2 | 5.90 % | 0.60 % | 49.50 % | 2 phase with crystals |
| 3 | 5.72 % | 1.30 % | 48.99 % | 2 phase with crystals |
| 4 | 4.68 % | 0.81 % | 50.51 % | 2 phase with crystals |
| 5 | 4.10 % | 1.31 % | 50.59 % | 2 phase with crystals |
| 6 | 2.75 % | 1.69 % | 51.56 % | 2 phase with crystals |
| 7 | 1.64 % | 2.39 % | 51.97 % | 2 phase with crystals |
| 8 | 0.74 % | 2.48 % | 52.78 % | 2 phase with crystals |
| 9 | 0.45 % | 2.09 % | 53.46 % | 2 phase with crystals |
| 10 | 0.00 % | 2.99 % | 53.01 % | 2 phase with crystals |
| 11 | 7.51 % | 0.49 % | 48.00 % | 2 phase with crystals |
| 12 | 7.45 % | 0.00 % | 48.55 % | 2 phase with crystals |
| 13 | 5.98 % | 0.00 % | 50.02 % | 2 phase with crystals |
| 14 | 5.04 % | 0.00 % | 50.96 % | 2 phase with crystals |
| 15 | 3.99 % | 0.00 % | 52.01 % | 2 phase with crystals |
| 16 | 5.00 % | 2.50 % | 48.51 % | 2 phase with crystals |
| 17 | 2.98 % | 3.49 % | 49.53 % | 2 phase with crystals |
| 18 | 0.00 % | 4.99 % | 51.01 % | 2 phase with crystals |
| 19 | 1.56 % | 3.06 % | 51.38 % | 2 phase with crystals |
| 20 | 2.51 % | 4.94 % | 48.54 % | 2 phase with crystals |
| 21 | 5.91 % | 3.44 % | 46.64 % | 2 phase with crystals |
| 22 | 3.98 % | 4.97 % | 47.05 % | 2 phase with crystals |
| 23 | 4.99 % | 5.01 % | 46.00 % | 2 phase with crystals |
| 24 | 1.86 % | 1.20 % | 52.94 % | 2 phase with crystals |
| 25 | 8.50 % | 1.50 % | 46.00 % | 2 phase with crystals |
| 26 | 0.00 % | 0.00 % | 56.00 % | 2 phase with crystals |

**Table 14**

| Propylene Glycol Solvent System Stored at -10°C for Two Weeks Allowed to Reach Ambient Temperature for 1 Day | | | | |
|---|---|---|---|---|
| Sample # | Propylene Glycol | Morwet D425 | Water | Observation |
| 1 | 10.00 % | 0.00 % | 46.00 % | 1 phase |
| 2 | 5.90 % | 0.60 % | 49.50 % | 1 phase |
| 3 | 5.72 % | 1.30 % | 48.99 % | 1 phase |
| 4 | 4.68 % | 0.81 % | 50.51 % | 1 phase |
| 5 | 4.10 % | 1.31 % | 50.59 % | 1 phase |
| 6 | 2.75 % | 1.69 % | 51.56 % | 1 phase |
| 7 | 1.64 % | 2.39 % | 51.97 % | 1 phase |
| 8 | 0.74 % | 2.48 % | 52.78 % | 1 phase |
| 9 | 0.45 % | 2.09 % | 53.46 % | 2 phase with crystals |
| 10 | 0.00 % | 2.99 % | 53.01 % | 2 phase with crystals |
| 11 | 7.51 % | 0.49 % | 48.00 % | 1 phase |
| 12 | 7.45 % | 0.00 % | 48.55 % | 1 phase |
| 13 | 5.98 % | 0.00 % | 50.02 % | 1 phase |
| 14 | 5.04 % | 0.00 % | 50.96 % | 1 phase |
| 15 | 3.99 % | 0.00 % | 52.01 % | 1 phase |
| 16 | 5.00 % | 2.50 % | 48.51 % | 1 phase |
| 17 | 2.98 % | 3.49 % | 49.53 % | 1 phase |
| 18 | 0.00 % | 4.99 % | 51.01 % | 1 phase |
| 19 | 1.56 % | 3.06 % | 51.38 % | 1 phase |
| 20 | 2.51 % | 4.94 % | 48.54 % | 1 phase |
| 21 | 5.91 % | 3.44 % | 46.64 % | 1 phase |
| 22 | 3.98 % | 4.97 % | 47.05 % | 1 phase |
| 23 | 4.99 % | 5.01 % | 46.00 % | 2 phase with crystals |
| 24 | 1.86 % | 1.20 % | 52.94 % | 1 phase |
| 25 | 8.50 % | 1.50 % | 46.00 % | 1 phase |
| 26 | 0.00 % | 0.00 % | 56.00 % | 2 phase with crystals |

**Table 15**

| Propylene Glycol Solvent System Stored at 5°C for Two Weeks Allowed to Reach Ambient Temperature for 1 Day | | | | |
|---|---|---|---|---|
| Sample # | Propylene Glycol | Morwet D425 | Water | Observation |
| 1 | 10.00 % | 0.00 % | 46.00 % | 1 phase |
| 2 | 5.90 % | 0.60 % | 49.50 % | 2 phase with crystals |
| 3 | 5.72 % | 1.30 % | 48.99 % | 2 phase with crystals |
| 4 | 4.68 % | 0.81 % | 50.51 % | 2 phase with crystals |
| 5 | 4.10 % | 1.31 % | 50.59 % | 2 phase with crystals |
| 6 | 2.75 % | 1.69 % | 51.56 % | 2 phase with crystals |
| 7 | 1.64 % | 2.39 % | 51.97 % | 2 phase with crystals |
| 8 | 0.74 % | 2.48 % | 52.78 % | 2 phase with crystals |
| 9 | 0.45 % | 2.09 % | 53.46 % | 2 phase with crystals |
| 10 | 0.00 % | 2.99 % | 53.01 % | 2 phase with crystals |
| 11 | 7.51 % | 0.49 % | 48.00 % | 1 phase |
| 12 | 7.45 % | 0.00 % | 48.55 % | 2 phase with crystals |
| 13 | 5.98 % | 0.00 % | 50.02 % | 2 phase with crystals |
| 14 | 5.04 % | 0.00 % | 50.96 % | 2 phase with crystals |
| 15 | 3.99 % | 0.00 % | 52.01 % | 2 phase with crystals |
| 16 | 5.00 % | 2.50 % | 48.51 % | 2 phase with crystals |
| 17 | 2.98 % | 3.49 % | 49.53 % | 2 phase with crystals |
| 18 | 0.00 % | 4.99 % | 51.01 % | 2 phase with crystals |
| 19 | 1.56 % | 3.06 % | 51.38 % | 2 phase with crystals |
| 20 | 2.51 % | 4.94 % | 48.54 % | 2 phase with crystals |
| 21 | 5.91 % | 3.44 % | 46.64 % | 2 phase with crystals |
| 22 | 3.98 % | 4.97 % | 47.05 % | 2 phase with crystals |
| 23 | 4.99 % | 5.01 % | 46.00 % | 1 phase |
| 24 | 1.86 % | 1.20 % | 52.94 % | 2 phase with crystals |
| 25 | 8.50 % | 1.50 % | 46.00 % | 1 phase |
| 26 | 0.00 % | 0.00 % | 56.00 % | 2 phase with crystals |

The data in TABLES 5-10 show that there are numerous combinations available to produce an acceptable formulation for increasing the solubility of a highly water soluble compound such as sodium acifluorfen and that by following the steps of the experiments described herein optimum solubility parameters may be selected when choosing various dispersants and co-solvents.

The ethylene glycol - sodium naphthalenesulfonate co-polymer blend has provided superior results. Some of the samples had gel formations which would completely disperse and dissolve on agitation. Crystal structures which formed in ethylene glycol co-solvents seemed to redissolve more readily. All samples maintained solution at 50°C, without the formation of a gel or crystal structure.

The butyl cellosolve behaved similarly to ethylene glycol. The butyl cellosolve produced slightly more crystals at -10°C. The crystals in the butyl cellosolve samples did not completely dissolve. All samples were in solution at 50°C.

The invention has been described with reference to various specific embodiments. However, many variations and modifications may be made while remaining within the scope and spirit of the invention.

## Claims

1. A composition comprising:
(a) a water soluble compound
(b) an effective amount of a dispersing agent sufficient to increase the solubility of the water soluble compound in an aqueous solution; and
(c) water.

2. The composition as claimed in Claim 1 wherein the weight of the dispersing agent ranges, by weight of the total weight of the composition, from about 0.1% to about 7.0%.

3. The composition as claimed in Claim 1 wherein the weight of the dispersing agent ranges, by weight of the total weight of the composition, from about 2% to about 5%.

4. The composition as claimed in any of Claims 1 to 3 further comprising a co-solvent.

5. The composition as claimed in Claim 4 wherein the weight of the co-solvent ranges, by weight of the total composition, from about 0.1% to about 10%.

6. The compositon as claimed in any of claims 1 to 5 wherein the water solubility of the water solble compound is at least 5 g/l.

7. The composition as claimed in any of claims 1 to 6 wherein the dispersing agent (b) is selected from the group consisting of alkylnaphtalene-formaldehyde condensates, lignin polymers, alkyl naphtahlalene sulfonates and polymeric dispersants.

8. The composition as claimed in any one of claims 1 to 7 wherein the dispersing agent (b) is an alkylnaphtalene formaldehyde condensate.

9. The composition as claimed in any one of claims 1 to 8 wherein the water soluble compound is selected from the group consisting of bentazone and its salts, dicamba and its salts, salts of quinclorac, salts of dichlorprop, salts of diflufenzopyr, salts of 2, 4-D, fomesafen and its salts, salts of MCPA, salts of MCPB, salts of imazethapyr, salts of imazamethabenz and salts of mecoprop or their mixtures.

10. The composition as claimed in any one of claims 1 to 7 wherein the water soluble compound is a salt of acifluorfen.

11. A method of increasing the solubility of a water soluble compound in an aqueous solution comprising adding an effective amount of a dispersing agent to the solution wherein crystals of the water soluble compound in the solution have a mean volume diameter of less than 20 microns.

12. The method as recited in Claim 11 wherein the dispersed crystals have a mean volume diameter of less than about 10 microns.

13. The method as recited in Claim 12 wherein the dispersed crystals have a mean volume diameter of about 1 to about 10 microns.
